# FASCICULE DE BREVET EUROPEEN

(11) **EP 2 382 515 B1**
(45) Date de publication et mention de la délivrance du brevet: **26.10.2016**
(21) Numéro de dépôt: 10704392.9
(22) Date de dépôt: 21.01.2010
(51) Int. Cl.: B64C 19/00

(54) **CIRCUIT ÉLECTRONIQUE DE DÉTERMINATION D'UNE DONNÉE REPRÉSENTATIVE D'UN PARAMÈTRE DE L'AIR ET SYSTÈME COMPRENANT UN TEL CIRCUIT**
ELEKTRONISCHE SCHALTUNG ZUR ERMITTLUNG VON REPRÄSENTATIVEN DATEN EINES LUFTPARAMETERS UND SYSTEM MIT EINER SOLCHEN SCHALTUNG.
ELECTRONIC CIRCUIT FOR DETERMINING A DATA REPRESENTATIVE OF AN AIR PARAMETER AND SYSTEM WITH SUCH A CIRCUIT.

(30) Priorité: 28.01.2009 FR 0950532
(43) Date de publication de la demande: 02.11.2011
(73) Titulaire: Airbus Operations (S.A.S.), 31060 Toulouse (FR)
(72) Inventeur: FEAU, Julien, F-31000 Toulouse (FR)
(74) Mandataire: Santarelli
(86) Numéro de dépôt international: PCT/FR2010/000056
(87) Numéro de publication internationale: WO 2010/086526

(56) Documents cités:
- EP-A- 0 393 730
- FR-A- 2 850 356
- FR-A- 2 916 290
- CALIA A ET AL: "Air Data Failure Management in a Full-Authority Fly-By-Wire Control System" CONTROL APPLICATIONS, 2006 IEEE INTERNATIONAL CONFERENCE ON, IEEE, PI, 1 octobre 2006 (2006-10-01), pages 3277-3281, XP031011672 ISBN: 978-0-7803-9795-8

## Description

L'invention concerne un circuit électronique de détermination d'une donnée représentative d'un paramètre de l'air environnant un aéronef et un système comprenant un tel circuit.

Il est connu de prendre en compte les données issues d'une pluralité de sources redondantes de mesure d'un paramètre de l'air (telle que par exemple la pression totale, la pression statique ou la température) et de sélectionner parmi ces données celle qui sera finalement utilisée, par exemple au sein d'un calculateur de commande d'un moteur (en général dans ce cas dans le but de déterminer des paramètres tels que l'altitude standard, le nombre de Mach et la différence entre la température effective et la température standard).

Des systèmes effectuant ces opérations sont par exemple décrits dans les demandes de brevet FR 2 850 356 et FR 2 916 290, EP0393730.

Dans ces systèmes, la robustesse de la logique de sélection est améliorée grâce au nombre important de comparaisons entre sources. En outre, afin de respecter la contrainte d'isolation des moteurs alors que ces systèmes prévoyaient toujours la sélection de la donnée à utiliser au sein des calculateurs de commande du moteur, on aboutissait à une conception relativement complexe impliquant soit l'échange d'informations d'exactitude (relatives chacune à une donnée issue d'une source du fuselage), soit l'échange de résultats de comparaison.

La présente invention vise ainsi à simplifier la conception du système, tout en permettant de conserver une bonne robustesse et de pouvoir respecter la contrainte d'isolation des moteurs.

Dans ce but notamment, l'invention propose un circuit électronique de détermination d'une donnée représentative d'un paramètre de l'air environnant un aéronef, caractérisé en ce qu'il comprend :
- des moyens de réception, en provenance d'une pluralité de sources, d'une pluralité respective de données de mesure représentatives d'une valeur mesurée du paramètre ;
- des moyens de détermination de ladite donnée représentative du paramètre en fonction des données de mesure ;
- des moyens d'émission de la donnée représentative du paramètre à destination d'un calculateur associé à un moteur de l'aéronef.

L'utilisation d'un tel circuit permet de n'échanger que des données représentatives du paramètre (ce qui simplifie la conception) tout en assurant une grande robustesse grâce aux comparaisons réalisées au moyen des données reçues des différentes sources.

La simplicité de cette solution facilite la compréhension du fonctionnement par les divers intervenants et permet ainsi d'éviter des erreurs préjudiciables.

Les moyens de détermination comprennent par exemple des moyens de comparaison des données de mesure et des moyens de sélection de la donnée représentative du paramètre parmi les données de mesure.

On peut alors prévoir que les moyens de comparaison et les moyens de sélection sont aptes à déterminer, pour certaines données au moins parmi la pluralité de données de mesure, le nombre d'autres données de mesure en accord et à choisir la donnée représentative du paramètre parmi les données pour lesquelles le nombre d'autres données en accord est maximum.

Cette logique de sélection combine elle aussi robustesse et simplicité.

Lesdites certaines données sont par exemple les données reçues en provenance de sources associées à un fuselage de l'aéronef afin de pouvoir la plupart du temps sélectionner une même source pour les différents moteurs (ce qui n'est pas possible avec les sources des moteurs en raison de la contrainte d'isolation des moteurs).

Les moyens d'émission sont typiquement aptes à émettre la donnée représentative du paramètre (destinée au calculateur de commande du moteur) sur un bus de communication de l'aéronef.

Selon la conception retenue, l'invention propose un système de détermination d'une donnée représentative d'un paramètre de l'air environnant un aéronef, caractérisé en ce qu'il comprend :
- une pluralité de sources aptes chacune à émettre une donnée de mesure représentative d'une valeur mesurée du paramètre ;
- un circuit électronique de détermination apte à recevoir les données de mesure émises par la pluralité de sources, à déterminer la donnée représentative du paramètre en fonction des données de mesure reçues et à émettre la donnée représentative du paramètre ;
- un calculateur de commande associé à un moteur de l'aéronef et apte à recevoir la donnée émise et à commander le moteur en fonction de la donnée émise.

Selon un premier mode de réalisation, chaque source de la pluralité de sources (par exemple au moins trois en pratique) est située au niveau d'un fuselage de l'aéronef, ce qui permet d'éviter de placer des sources au niveau des moteurs.

Selon un second mode de réalisation, au moins une source parmi la pluralité de sources est située au niveau du moteur. Cette source peut ainsi être utilisée en cas de problème lors de la détermination de la donnée sélectionnée.

On peut prévoir dans ce contexte qu'une autre source parmi la pluralité de sources soit située au niveau d'un autre moteur de l'aéronef.

Le système de détermination peut également comprendre :
- un autre circuit électronique de détermination apte à recevoir les données de mesure émises par la pluralité de sources, à sélectionner une donnée parmi les données de mesure reçues et à émettre la donnée sélectionnée ;
- un autre calculateur de commande associé à un autre moteur de l'aéronef, et apte à recevoir la donnée émise par l'autre circuit électronique et à commander l'autre moteur en fonction de la donnée reçue.

On respecte ainsi le principe d'isolation des moteurs.

L'invention propose également un aéronef comprenant un tel système.

D'autres caractéristiques et avantages de l'invention apparaîtront mieux à la lecture de la description qui suit, faite en référence aux dessins annexés dans lesquels :
- la figure 1 représente un système de traitement des données air selon un premier exemple de mise en oeuvre de l'invention ;
- la figure 2 représente la logique de sélection des données dans le système de la figure 1 ;
- la figure 3 représente un système de traitement des données air selon un second exemple de mise en oeuvre de l'invention ;
- la figure 4 représente de la logique de sélection des données dans le système de la figure 3.

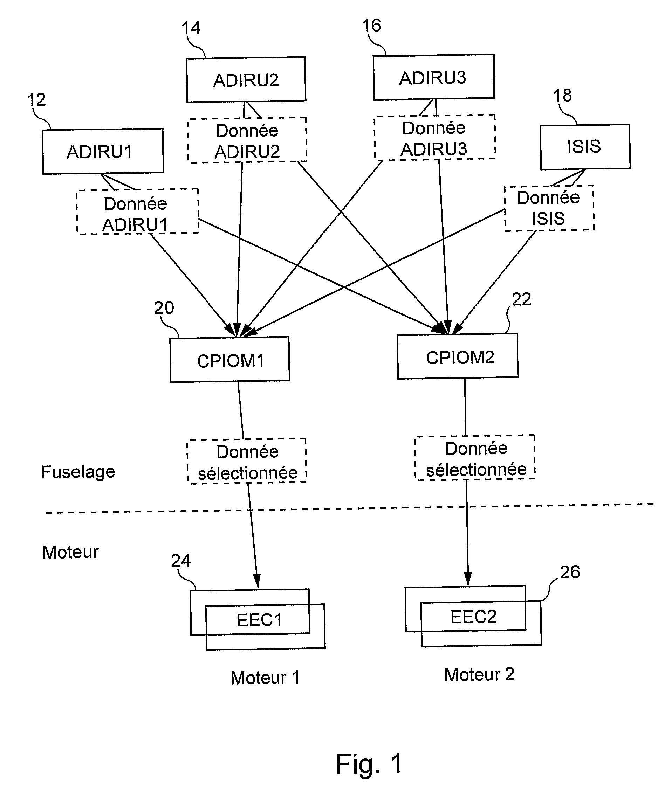

La **figure 1** représente les éléments principaux d'un système de traitement des données air dans un aéronef. Un tel système permet notamment la sélection d'une donnée représentative d'un paramètre de l'air parmi une pluralité de données issues de sources redondantes en vue de l'utilisation de la donnée sélectionnée, par exemple dans le cadre de la commande d'un moteur.

Ce système comprend tout d'abord une pluralité de calculateurs situés au niveau du fuselage de l'aéronef :
- trois calculateurs 12, 14, 16 associés à des sources situées sur le fuselage, généralement dénommés ADIRU (pour *"Air Data and Inertial Reference Unit"*);
- un calculateur 18 de type ISIS (pour *"Integrated Standby Instrument System*") qui traite une source de données air de réserve ;
- des calculateurs génériques 20, 22, par exemple de type CPIOM (pour *"Core Processing Imput*/*Output Module*") qui permettent ici notamment la sélection d'une données parmi celles reçues des calculateurs précédemment mentionnés comme décrit en détail dans la suite.

On considère ici comme fuselage de l'aéronef l'ensemble des parties de l'aéronef à l'exception du ou des moteurs, qu'il s'agisse de moteurs portés par les ailes ou d'un moteur situé au niveau de la queue de l'aéronef.

Du fait de leur fonction respective dans le cadre de la présente description, on dénommera *"calculateurs de sélection"* 20, 22 les calculateurs de type CPIOM et *"calculateurs de mesure"* 12, 14, 16, 18 les calculateurs de type ADIRU et ISIS, sans d'ailleurs que cela n'exclue que ces calculateurs puissent en pratique réaliser d'autres fonctions.

Chacun des calculateurs de mesure ADIRU1 12, ADIRU2 14, ADIRU3 16 et ISIS 18 détermine une donnée représentative du paramètre de l'air concerné (par exemple la pression totale) en fonction d'une mesure effectuée par un capteur associé au calculateur et situé au niveau du fuselage de l'aéronef.

Ces différents calculateurs de mesure forment ainsi des sources redondantes et indépendantes de données représentatives du paramètre concerné.

Chaque calculateur de sélection 20, 22 reçoit les différentes données émises indépendamment par chaque calculateur de mesure 12, 14, 16, 18 et procède à la sélection d'une donnée parmi celles-ci selon la logique expliquée en détail ci-après.

La donnée sélectionnée est alors émise à destination d'un calculateur de commande 24, 26 associé à un moteur et situé au niveau de celui-ci.

Dans l'exemple représenté sur la figure 1, le calculateur de sélection CPIOM1 20 est associé au calculateur de commande EEC1 24, tandis que le calculateur de sélection CPIOM2 22 est associé (c'est-à-dire émet la donnée sélectionnée à destination du) calculateur de commande EEC2 26.

On remarque que les échanges de données mentionnés ci-dessus (tant entre les calculateurs de mesure et le calculateur de sélection concerné qu'entre le calculateur de sélection et le calculateur de commande du moteur) sont mis en oeuvre grâce au bus d'échange de données reliant classiquement les calculateurs entre eux au sein d'un aéronef.

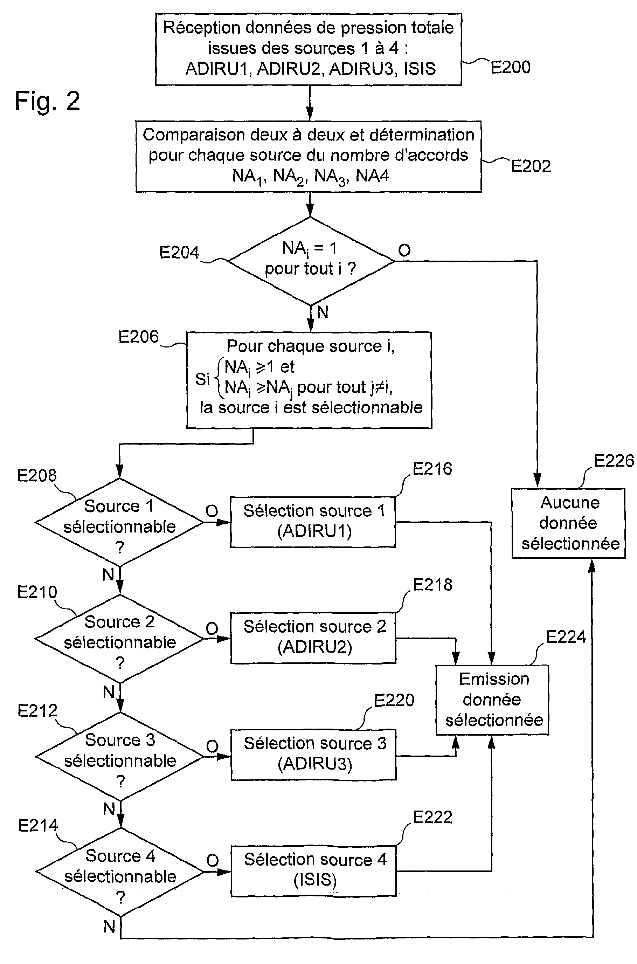

La logique de mise en oeuvre de la sélection réalisée dans chaque calculateur de sélection de type CPIOM 20, 22 est à présent décrite en référence à la figure 2.

La **figure 2** représente ainsi les étapes principales du fonctionnement d'un calculateur de sélection 20, 22 en ce qui concerne le traitement et la sélection parmi les données représentatives de la pression totale. Le traitement des autres paramètres concernés (par exemple la pression statique et la température) peut être réalisé selon une logique identique.

Le procédé de traitement commence à l'étape E200 par la réception des données représentatives de la pression totale en provenance des calculateurs de mesure 12, 14, 16, 18 associés chacun à une source : ADIRU1, ADIRU2, ADIRU3, ISIS, désignés respectivement comme sources 1 à 4 ci-après.

Le calculateur de sélection concerné effectue alors à l'étape E202 la comparaison deux à deux des données reçues et peut ainsi déterminer, pour chaque source i, le nombre d'autres sources en accord NAᵢ, deux sources étant en accord si leurs données sont valides et diffèrent d'une valeur inférieure (en valeur absolue) à un seuil, par exemple de 38 mb pour la pression totale.

On vérifie alors à l'étape E204 qu'on ne se trouve pas dans le cas où tous les nombres d'accords NAᵢ sont égaux à 1 (qui se produit lorsque les sources sont en accord par paires mais en désaccord d'une paire à l'autre).

Si tous les nombres d'accords NAᵢ sont égaux à 1, on considère qu'on ne peut pas sélectionner de manière satisfaisante une valeur (puisque rien ne permet de favoriser une paire par rapport à l'autre) et on passe à l'étape E226 qui correspond à une absence de sélection possible (décrite plus bas).

S'il existe au moins une source i pour laquelle le nombre d'accords NAᵢ est différent de 1 (réponse négative à l'étape E204), on procède à l'étape E206 au cours de laquelle on prend successivement chaque source en considération : si le nombre d'accords NAᵢ pour la source considérée est d'une part supérieur ou égal à 1 et d'autre part supérieur ou égal aux nombres d'accords NAⱼ de toutes les autres sources, on considère que la source i est sélectionnable.

Cela revient à dire que sont sélectionnables toutes les sources qui atteignent un nombre d'accords non nul et maximum parmi les quatre sources.

Lorsque ce traitement est effectué, on passe à l'étape E208 à laquelle on détermine si la source 1 (correspondant au calculateur 12 ADIRU1) est sélectionnable, auquel cas on sélectionne la source 1 (étape E216).

Dans la négative à l'étape E208, on détermine à l'étape E210 si la source 2 est sélectionnable, auquel cas on sélectionne la source 2 (associée au calculateur 14 ADIRU2) à l'étape E218.

Si la réponse est négative à l'étape E210, on détermine à l'étape E212 si la source 3 est sélectionnable, auquel cas on sélectionne la source 3 (correspondant au calculateur 16 ADIRU3) à l'étape E220.

Si la source 3 n'est pas sélectionnable à l'étape E212, on détermine à l'étape E214 si la source 4 (correspondant au calculateur de mesure 18 ISIS) est sélectionnable, auquel cas on sélectionne la donnée issue de ce calculateur 18 (source 4) à l'étape E222.

Quelle que soit la donnée sélectionnée (étapes E216 à E222), on émet alors cette donnée sélectionnée à destination du calculateur de commande 24, 26 associé au calculateur de sélection concerné 20, 22.

En utilisant cette solution pour les différents paramètres de l'air, chaque calculateur de commande 24, 26 peut ainsi déterminer les informations de commande destinées au moteur (en particulier l'information de commande de la poussée du moteur) au moyen de paramètres (tels que l'altitude standard, le nombre de Mach et la différence entre la température effective et la température standard) obtenus chacun dans une table de correspondance respective en fonction des données représentatives des paramètres de l'air (pression statique, pression totale et température) déterminées comme indiqué ci-dessus.

En revanche, si même la source 4 n'est pas sélectionnable (auquel cas, aucune des sources n'est sélectionnée, ce qui se produit lorsqu'aucun accord entre sources n'a été détecté), on passe à l'étape E226 relative à l'absence de sélection.

Le traitement effectué à l'étape E226 en l'absence de sélection de données peut consister par exemple à reconduire la dernière donnée sélectionnée pendant une durée déterminée (par exemple 5 secondes), puis à émettre un signal d'invalidité de la donnée une fois cette durée écoulée (auquel cas, le calculateur de commande 24, 26 recevra cette information d'invalidité de la donnée et basculera en mode de fonctionnement par défaut, c'est-à-dire sans connaissance de la valeur du paramètre).

On comprend que la logique de sélection qui vient d'être décrite permet de sélectionner la donnée issue d'une des sources qui sont en accord avec le plus grand nombre d'autres sources, le choix entre les différentes sources ayant atteint ce nombre d'accords maximum étant imposé par convention, c'est-à-dire de manière prédéterminée, afin que les calculateurs de sélection 20, 22 choisissent dans ce cas la même donnée, ce qui permet un fonctionnement symétrique des moteurs dont les calculateurs de commande reçoivent cette donnée.

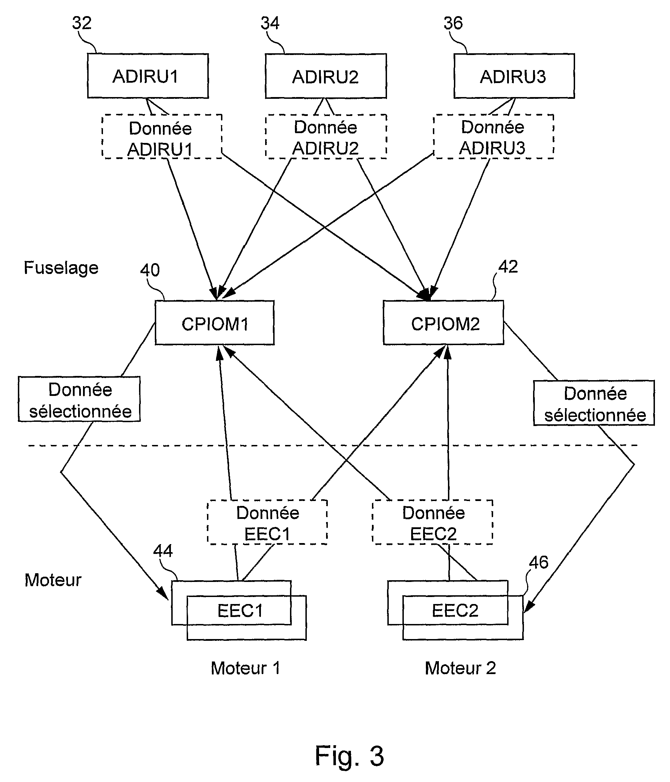

La **figure 3** représente les éléments principaux d'un système de traitement des données représentatives des paramètres de l'air selon un second mode de réalisation.

Dans ce second mode de réalisation, trois calculateurs de mesure ADIRU1, ADIRU2, ADIRU3 (respectivement référencés dans la suite 32, 34, 36) déterminent chacun des données représentatives d'une valeur de chacun des paramètres mesurés (pression statique, pression totale, température) sur la base de mesures effectuées par des capteurs associés au fuselage de l'aéronef.

Les trois calculateurs de mesure 32, 34, 36 constituent ainsi des sources redondantes et indépendantes des données air.

Dans le présent mode de réalisation, des calculateurs de commande de moteur 44, 46, associés chacun à un moteur distinct de l'aéronef, délivrent également chacun des données représentatives des paramètres de l'air, déterminées au moyen de capteurs associés au (c'est-à-dire ici situés sur le) moteur concerné.

Le système représenté à la figure 3 comprend en outre deux calculateurs de sélection 40, 42, situés ici au niveau du fuselage de l'aéronef, et qui reçoivent chacun les données représentatives de chaque paramètre de l'air des cinq sources précédemment mentionnées, à savoir les trois calculateurs de mesure 32, 34, 36 et les deux calculateurs de commande 44, 46.

Les données sont par exemple échangées entre les calculateurs au moyen du bus avionique qui équipe l'aéronef.

On rappelle par ailleurs que le vocabulaire *"calculateur de mesure", "calculateur de sélection"* s'intéresse pour les calculateurs concernés à la fonction mise en oeuvre dans le cadre de la présente description, sans exclure toutefois que ces calculateurs puissent mettre en oeuvre d'autres fonctions au sein de l'aéronef.

Chaque calculateur de sélection 40, 42 sélectionne (pour chaque paramètre) l'une des cinq données reçues des différents calculateurs sur la base de la logique de sélection décrite ci-après et émet (toujours pour chaque paramètre) la donnée sélectionnée à destination du calculateur de commande 44, 46 associée au calculateur de sélection concerné 40, 42 (le calculateur de sélection CPIOM1 40 étant associé au calculateur de commande EEC1 44 et le calculateur de sélection CPIOM2 42 étant associé au calculateur de commande EEC2 46).

Chaque calculateur de commande 44, 46 reçoit ainsi pour chaque paramètre une donnée sélectionnée représentative de la valeur de ce paramètre et peut ainsi déterminer, à l'aide par exemple de tables de correspondance, d'autres paramètres utilisés pour déterminer les informations de commande destinées au moteur, tels que par exemple l'altitude standard, le nombre de Mach et la différence entre la température effective et la température standard.

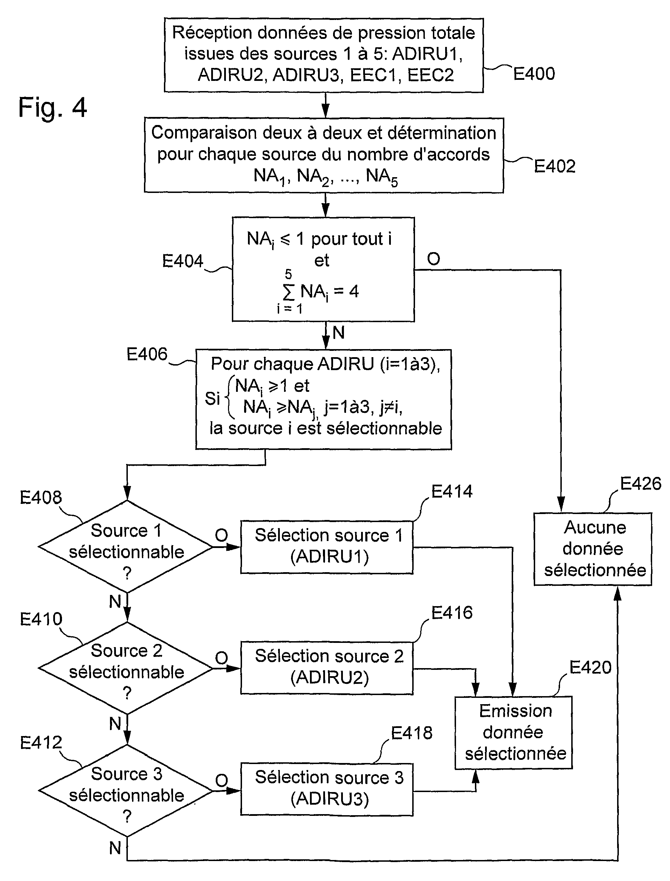

La **figure 4** représente les étapes principales de mise en oeuvre de la sélection d'une donnée représentative d'un paramètre de l'air (ici la température) telle qu'elle est réalisée au sein de chacun des deux calculateurs de sélection 40, 42.

Comme déjà indiqué, le calculateur de sélection concerné 40, 42 reçoit les données représentatives des valeurs de température mesurée émises par chacune des cinq sources indépendantes (ADIRU1, ADIRU2, ADIRU3, EEC1, EEC2, respectivement désignées ci-après sources 1 à 5) à l'étape E400.

Le calculateur de sélection 40, 42 procède alors à l'étape E402 à la comparaison deux à deux des données reçues et détermine ainsi pour chaque source i le nombre NAᵢ d'autres sources en accord avec la source i concernée (les valeurs des NAᵢ variant donc entre 0 et 4). On considère par exemple que deux données de température sont en accord lorsqu'elles sont valides et lorsque la valeur absolue de leur différence est inférieure à 5C°.

On détermine alors à l'étape E404 si toutes les valeurs NAᵢ sont égales soit à 0, soit à 1 et si la somme de toutes les valeurs NAᵢ vaut 4 (ce qui signifierait que deux paires de sources sont accord dans chaque paire seulement et qu'on ne peut donc trancher quant à une donnée estimant correctement la valeur du paramètre).

Dans le cas d'une détermination positive à l'étape E404, on passe à l'étape E422 de traitement des cas d'impossibilité de sélection d'une source (expliqué en détail plus loin).

Dans le cas d'une détermination négative à l'étape E404, on passe à l'étape E406 au cours de laquelle on vérifie pour chaque source correspondant à un calculateur de mesure situé au niveau du fuselage (c'est-à-dire pour chaque ADIRU, ou pour chaque source i avec i compris entre 1 et 3) d'une part si le nombre d'accords NAᵢ associé est supérieur ou égal à 1 et, d'autre part, si ce nombre d'accords NAᵢ est supérieur ou égal aux nombres d'accords NAⱼ obtenus pour les autres ADIRU (c'est-à-dire lorsque j prend les valeurs différentes de i comprises entre 1 et 3).

Si la condition précédemment mentionnée est vérifiée (c'est-à-dire lorsque le nombre d'accords NAᵢ de la source i considérée est le plus grand nombre d'accords non-nul rencontré parmi les ADIRU), on considère que la source i est sélectionnable.

Lorsque la détermination qui vient d'être expliquée est réalisée pour toutes les sources associées au fuselage (ADIRU), on procède à l'étape E408 à laquelle on vérifie s'il a été déterminé précédemment que la source 1 (donnée issue du calculateur de mesure 32 ADIRU1) est sélectionnable, auquel cas, on procède à l'étape E414 à la sélection de la source 1 (c'est-à-dire de la donnée issue du calculateur de mesure 32).

Si la source 1 n'est pas sélectionnable, on procède à l'étape E410 à laquelle on vérifie si la source 2 est sélectionnable : dans l'affirmative, on sélectionne la source 2 (c'est-à-dire la donnée émise par le calculateur de mesure 34, également dénommé ADIRU2) à l'étape E416.

Si on détermine à l'étape E410 que la source 2 n'est pas sélectionnable, on vérifie si la source 3 est sélectionnable à l'étape E412 ; dans l'affirmative, on sélectionne la donnée correspondant à la source 3 (c'est-à-dire la donnée émise par le calculateur de mesure 36, également dénommé ADIRU3) à l'étape E418.

Si une donnée a été sélectionnée (étapes E414, E416 ou E418), on procède à l'étape E420 à l'émission de cette donnée sélectionnée à destination du calculateur de commande 44, 46 associé aux calculateurs de sélection concernés 40, 42.

Si en revanche il a été déterminé à l'étape E412 que même la source 3 n'est pas sélectionnable, on procède à l'étape E422 déjà mentionnée pour le traitement du cas où il est impossible de sélectionner une donnée.

On peut prévoir par exemple pour la mise en oeuvre de l'étape E422 que la dernière valeur de température soit reconduite pendant une durée prédéterminée (par exemple 5 secondes), durée à la fin de laquelle le calculateur de sélection 40, 42 émettra à destination du calculateur de commande associé 44, 46 une information d'invalidité de la donnée sélectionnée émise précédemment.

Le calculateur de commande concerné 44, 46 pourra alors par exemple soit sélectionner la donnée générée par sa propre source, soit passer en mode de fonctionnement par défaut si sa propre source est indisponible.

Les modes de réalisation qui précèdent ne sont que des exemples possibles de mise en oeuvre de l'invention.

## Revendications

1. Circuit électronique de détermination d'une donnée représentative d'un paramètre de l'air environnant un aéronef, **caractérisé en ce qu'**il comprend :
- des moyens de réception, en provenance d'une pluralité de sources, d'une pluralité respective de données de mesure représentatives d'une valeur mesurée du paramètre ;
- des moyens de détermination de ladite donnée représentative du paramètre en fonction des données de mesure ;
- des moyens d'émission de la donnée représentative du paramètre à destination d'un calculateur associé à un moteur de l'aéronef.

2. Circuit électronique selon la revendication 1, **caractérisé en ce que** les moyens de détermination comprennent des moyens de comparaison des données de mesure et des moyens de sélection de la donnée représentative du paramètre parmi les données de mesure.

3. Circuit électronique selon la revendication 2, **caractérisé en ce que** les moyens de comparaison et les moyens de sélection sont aptes à déterminer, pour certaines données au moins parmi la pluralité de données de mesure, le nombre d'autres données de mesure en accord et à choisir la donnée représentative du paramètre parmi les données pour lesquelles le nombre d'autres données en accord est maximum.

4. Circuit électronique selon l'une des revendications 1 à 3, **caractérisé en ce que** les moyens d'émission sont aptes à émettre la donnée représentative du paramètre sur un bus de communication de l'aéronef.

5. Système de détermination d'une donnée représentative d'un paramètre de l'air environnant un aéronef, **caractérisé en ce qu'**il comprend :
- une pluralité de sources aptes chacune à émettre une donnée de mesure représentative d'une valeur mesurée du paramètre ;
- un circuit électronique de détermination selon la revendication 1;
- un calculateur de commande associé à un moteur de l'aéronef et apte à recevoir la donnée émise et à commander le moteur en fonction de la donnée émise.

6. Système de détermination selon la revendication 5, **caractérisé en ce que** le circuit électronique comprend des moyens de sélection de la donnée représentative du paramètre parmi les données de mesure.

7. Système de détermination selon la revendication 5 ou 6, **caractérisé en ce que** chaque source de la pluralité de sources est située au niveau d'un fuselage de l'aéronef.

8. Système de détermination selon la revendication 5 ou 6, **caractérisé en ce qu'**au moins une source parmi la pluralité de sources est située au niveau du moteur et **en ce qu'**une autre source parmi la pluralité de sources est située au niveau d'un autre moteur de l'aéronef.

9. Système de détermination selon l'une des revendications 5 à 8, **caractérisé en ce qu'**il comprend :
- un autre circuit électronique de détermination apte à recevoir les données de mesure émises par la pluralité de sources, à sélectionner une donnée parmi les données de mesure reçues et à émettre la donnée sélectionnée ;
- un autre calculateur de commande associé à un autre moteur de l'aéronef, et apte à recevoir la donnée émise par l'autre circuit électronique et à commander l'autre moteur en fonction de la donnée reçue.

10. Aéronef **caractérisé en ce qu'**il comprend un système selon l'une des revendications 5 à 9.

## Patentansprüche

1. Elektronische Schaltung zur Bestimmung eines Datenwerts, der für einen Parameter der ein Luftfahrzeug umgebenden Luft repräsentativ ist, **dadurch gekennzeichnet, dass** sie enthält:
- Einrichtungen zum Empfang, von einer Vielzahl von Quellen, einer jeweiligen Vielzahl von Me3ssdaten, die für einen gemessenen Wert des Parameters repräsentativ sind;
- Einrichtungen zur Bestimmung des für den Parameter repräsentativen Datenwerts abhängig von den Messdaten;
- Einrichtungen zum Senden des für den Parameter repräsentativen Datenwerts an einen einem Motor des Luftfahrzeugs zugeordneten Rechner.

2. Elektronische Schaltung nach Anspruch 1, **dadurch gekennzeichnet, dass** die Bestimmungseinrichtungen Vergleichseinrichtungen der Messdaten und Auswahleinrichtungen des für den Parameter repräsentativen Datenwerts aus den Messdaten enthalten.

3. Elektronische Schaltung nach Anspruch 2, **dadurch gekennzeichnet, dass** die Vergleichseinrichtungen und die Auswahleinrichtungen fähig sind, für mindestens bestimmte Daten unter der Vielzahl von Messdaten die Anzahl weiterer übereinstimmender Messdaten zu bestimmen und den für den Parameter repräsentativen Datenwert aus den Daten auszuwählen, für die die Anzahl von weiteren übereinstimmenden Daten maximal ist.

4. Elektronische Schaltung nach einem der Ansprüche 1 bis 3, **dadurch gekennzeichnet, dass** die Sendeeinrichtungen fähig sind, den für den Parameter repräsentativen Datenwert auf einem Kommunikationsbus des Luftfahrzeugs zu senden.

5. System zur Bestimmung eines Datenwerts, der für einen Parameter der ein Luftfahrzeug umgebenden Luft repräsentativ ist, **dadurch gekennzeichnet, dass** es enthält:
- eine Vielzahl von Quellen, die je fähig sind, einen für einen gemessenen Wert des Parameters repräsentativen Messdatenwert zu senden;
- eine elektronische Bestimmungsschaltung nach Anspruch 1;
- einen Steuerrechner, der einem Motor des Luftfahrzeugs zugeordnet und fähig ist, den gesendeten Datenwert zu empfangen und den Motor abhängig vom gesendeten Datenwert zu steuern.

6. Bestimmungssystem nach Anspruch 5, **dadurch gekennzeichnet, dass** die elektronische Schaltung Einrichtungen zur Auswahl des für den Parameter repräsentativen Datenwerts aus den Messdaten enthält.

7. Bestimmungssystem nach Anspruch 5 oder 6, **dadurch gekennzeichnet, dass** jede Quelle der Vielzahl von Quellen sich im Bereich eines Rumpfs des Luftfahrzeugs befindet.

8. Bestimmungssystem nach Anspruch 5 oder 6, **dadurch gekennzeichnet, dass** mindestens eine Quelle unter der Vielzahl von Quellen sich im Bereich des Motors befindet, und dass eine weitere Quelle unter der Vielzahl von Quellen sich im Bereich eines weiteren Motors des Luftfahrzeugs befindet.

9. Bestimmungssystem nach einem der Ansprüche 5 bis 8, **dadurch gekennzeichnet, dass** es enthält:
- eine weitere elektronische Bestimmungsschaltung, die fähig ist, die von der Vielzahl von Quellen gesendeten Messdaten zu empfangen, einen Datenwert aus den empfangenen Messdaten auszuwählen und den ausgewählten Datenwert zu senden;
- einen weiteren Steuerrechner, der einem weiteren Motor des Luftfahrzeugs zugeordnet und fähig ist, den von der weiteren elektronischen Schaltung gesendeten Datenwert zu empfangen und den weiteren Motor abhängig vom empfangenen Datenwert zu steuern.

10. Luftfahrzeug, **dadurch gekennzeichnet, dass** es ein System nach einem der Ansprüche 5 bis 9 enthält.

## Claims

1. Electronic circuit for determining a datum representative of a parameter of the air surrounding an aircraft, **characterised in that** it comprises:
- means for receiving, from a plurality of sources, a respective plurality of measurement data representative of a measured value of the parameter;
- means for determining the said datum representative of the parameter as a function of the measurement data;
- means for transmitting the datum representative of the parameter to a computer associated with an engine of the aircraft.

2. Electronic circuit according to claim 1, **characterised in that** the determining means comprise means for comparing the measurement data and means for selecting the datum representative of the parameter from among the measurement data.

3. Electronic circuit according to claim 2, **characterised in that** the comparing means and the selecting means are able to determine, for certain data at least from among the plurality of measurement data, the number of other measurement data in agreement and to choose the datum representative of the parameter from among the data for which the number of other data in agreement is a maximum.

4. Electronic circuit according to one of claims 1 to 3, **characterised in that** the transmitting means are able to transmit the datum representative of the parameter on a communication bus of the aircraft.

5. System for determining a datum representative of a parameter of the air surrounding an aircraft, **characterised in that** it comprises:
- a plurality of sources each able to transmit a measurement datum representative of a measured value of the parameter;
- an electronic determining circuit according to claim 1;
- a control computer associated with an engine of the aircraft and able to receive the datum transmitted and to control the engine as a function of the datum transmitted.

6. Determining system according to claim 5, **characterised in that** the electronic circuit comprises means for selecting the datum representative of the parameter from among the measurement data.

7. Determining system according to claim 5 or 6, **characterised in that** each source of the plurality of sources is situated at the level of a fuselage of the aircraft.

8. Determining system according to claim 5 or 6, **characterised in that** at least one source from among the plurality of sources is situated at the level of the engine and **in that** another source from among the plurality of sources is situated at the level of another engine of the aircraft.

9. Determining system according to one of claims 5 to 8, **characterised in that** it comprises:
- another electronic determining circuit able to receive the measurement data transmitted by the plurality of sources, to select a datum from among the measurement data received and to transmit the selected datum;
- another control computer associated with another engine of the aircraft, and able to receive the datum transmitted by the other electronic circuit and to control the other engine as a function of the datum received.

10. Aircraft **characterised in that** it comprises a system according to one of claims 5 to 9.
